# EUROPÄISCHE PATENTSCHRIFT

(11) **EP 2 675 648 B1**
(45) Veröffentlichungstag und Bekanntmachung des Hinweises auf die Patenterteilung: **25.10.2017**
(21) Anmeldenummer: 12714540.7
(22) Anmeldetag: 10.02.2012
(51) Int. Cl.: B60K 35/00, B60K 37/02

(54) **VERFAHREN UND VORRICHTUNG ZUM ANZEIGEN VON BETRIEBSZUSTÄNDEN VON EINRICHTUNGEN EINES FAHRZEUGS UND MIT EINER SOLCHEN VORRICHTUNG AUSGESTATTETES FAHRZEUG**
METHOD AND DEVICE FOR DISPLAYING OPERATING STATES OF VEHICLE SYSTEMS AND VEHICLE EQUIPPED WITH SUCH A DEVICE
PROCÉDÉ ET DISPOSITIF POUR L'AFFICHAGE D'ÉTATS DE SERVICE DE SYSTÈMES D'UN VÉHICULE ET VÉHICULE ÉQUIPÉ AVEC UN TEL DISPOSITIF

(30) Priorität: 17.02.2011 DE 102011011605
(43) Veröffentlichungstag der Anmeldung: 25.12.2013
(73) Patentinhaber: Volkswagen Aktiengesellschaft, 38436 Wolfsburg (DE)
(72) Erfinder: KUHN, Mathias, 14129 Berlin (DE); HAHN, Alexander, 38104 Braunschweig (DE); JAXT, Fabian, 63322 Rödermark (DE); REICHELT, Oliver, 10115 Berlin (DE)
(86) Internationale Anmeldenummer: PCT/DE2012/000125
(87) Internationale Veröffentlichungsnummer: WO 2012/110021

(56) Entgegenhaltungen:
- EP-A1- 1 932 710
- WO-A1-2009/033518
- DE-A1-102005 035 481
- DE-A1-102007 001 317
- DE-A1-102008 050 803

## Beschreibung

Die vorliegende Erfindung betrifft ein Verfahren zum Anzeigen von Betriebszuständen von Einrichtungen eines Fahrzeugs. Ferner betrifft die Erfindung eine Vorrichtung zum Anzeigen von Betriebszuständen von Einrichtungen eines Fahrzeugs mit einem Sensor zum Erfassen eines Betriebsparameters des Fahrzeugs oder einer Fahrzeugeinrichtung, einer ersten Anzeigefläche, die im Innenraum des Fahrzeugs angeordnet ist, und einer Bedieneinrichtung mittels welcher weitere Fahrzeugeinrichtungen bedienbar sind. Ferner umfasst die Vorrichtung eine Steuervorrichtung, die mit dem Sensor, der Bedieneinrichtung und der Anzeigefläche gekoppelt ist und mittels derer Graphikdaten erzeugbar sind, die den Wert des erfassten Betriebsparameters auf der ersten Anzeigefläche mittels einer bogenförmigen Skala anzeigt, wobei durch die bogenförmige Skala auf der ersten Anzeigefläche eine Innenfläche definiert wird, und die den weiteren Fahrzeugeinrichtungen zugeordnete Anzeigeelemente anzeigen.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

In der WO 2009/033518 A1 wird ein konfigurierbares Anzeigeinstrument beschrieben, das mehrere Anzeigebereiche aufweist. Innerhalb einer ringförmigen Skala ist ein Auswahlbereich in Form eines Rings mit mehreren Symbolen gebildet. Das Symbol einer bestimmten Position kann dabei ausgewählt und vergrößert dargestellt werden.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Der vorliegenden Erfindung liegt die Aufgabe zugrunde, ein Verfahren und eine Vorrichtung der eingangs genannten Art bereitzustellen, bei welchen der Fahrer des Fahrzeugs die für ihn besonders relevanten Informationen so schnell und intuitiv wie möglich erfassen kann und bei welchen die dargestellten Informationen den Fahrer bei der Bedienung von Fahrzeugeinrichtungen unterstützen.

Erfindungsgemäß wird diese Aufgabe durch ein Verfahren mit den Merkmalen des Anspruchs 1 und eine Vorrichtung mit den Merkmalen des Anspruchs 9 sowie ein Fahrzeug mit einer solchen Vorrichtung nach Anspruch 17 gelöst. Vorteilhafte Ausgestaltungen und Weiterbildungen ergeben sich aus den abhängigen Ansprüchen.

Bei dem erfindungsgemäßen Verfahren wird zumindest ein Betriebsparameter des Fahrzeugs oder einer Fahrzeugeinrichtung erfasst und der Wert dieses erfassten Betriebsparameters wird auf einer im Innenraum des Fahrzeugs angeordneten ersten Anzeigefläche mittels einer bogenförmigen Skala angezeigt. Dabei wird durch die bogenförmige Skala auf der ersten Anzeigefläche eine Innenfläche definiert. Bei der Innenfläche der ersten Anzeigefläche werden Anzeigeelemente weiterer Fahrzeugeinrichtungen angezeigt, wobei den Anzeigeelementen ein bedienbarer Zustand, bei welchem die den Anzeigeelementen zugeordneten Fahrzeugeinrichtungen mittels einer Bedieneinrichtung direkt bedienbar sind, und ein nicht bedienbarer Zustand zugeordnet ist, bei welchem die den Anzeigeelementen zugeordneten Fahrzeugeinrichtungen nicht direkt mittels der Bedieneinrichtung bedienbar sind. Des Weiteren ist die Innenfläche in einen ersten und einen zweiten Bereich unterteilt. Die im bedienbaren Zustand befindlichen Anzeigeelemente werden im ersten Bereich und die im nicht bedienbaren Zustand befindlichen Anzeigeelemente im zweiten Bereich angezeigt.

Unter einem bedienbaren Zustand wird im Sinne der Erfindung verstanden, dass durch eine Bedienhandlung unmittelbar ein Steuerbefehl für die Fahrzeugeinrichtung erzeugt wird, der dem Anzeigeelement zugeordnet ist.

Unter einem nicht bedienbaren Zustand wird im Sinne der Erfindung verstanden, dass das entsprechende Anzeigeelement zwar aktiv sein kann, d.h. dass es z.B. einen Zustand einer Fahrzeugeinrichtung anzeigen kann. In diesem Zustand kann der Nutzer jedoch nicht direkt Einfluss auf die zugeordnete Fahrzeugeinrichtung nehmen. Der Nutzer muss das Anzeigeelement erst in den bedienbaren Zustand versetzen. Hierfür muss er zunächst eine erste Bedienhandlung vornehmen. Erst wenn sich das Anzeigeelement danach in dem bedienbaren Zustand befindet, kann der Nutzer durch eine zweite Bedienhandlung einen Steuerbefehl erzeugen, der direkt Auswirkungen auf die Fahrzeugeinrichtung hat.

Unter einer bogenförmigen Skala wird im Sinne der Erfindung verstanden, dass die Skala entlang einer gebogenen bzw. gekrümmten Linie verläuft. Die Linie verläuft insbesondere so, dass bei einer Verbindung der Endpunkt der Linie durch eine Strecke die Strecke die Linie nicht schneidet und von der Linie und dieser Strecke die Innenfläche von einer Außenfläche abgegrenzt wird. Die bogenförmige Skala liegt insbesondere auf einem Kreisbogen, beispielsweise auf einem vollständigen Kreis oder einem Halbkreis. Der Betriebsparameter, welcher auf der bogenförmigen Skala angezeigt wird, ist insbesondere die Geschwindigkeit des Fahrzeugs oder die Motordrehzahl.

Die erste Anzeigefläche ist insbesondere im sogenannten Kombiinstrument des Fahrzeugs angeordnet, sodass sie der Fahrer besonders gut ablesen kann. Hier wird dem Fahrer nicht nur die Geschwindigkeit des Fahrzeugs angezeigt, sondern auch Anzeigeelemente weiterer Fahrzeugeinrichtungen. Durch die erfindungsgemäße Unterteilung der Innenfläche innerhalb der bogenförmigen Skala z. B. für die Geschwindigkeit, kann der Fahrer schnell und intuitiv erkennen welche Fahrzeugeinrichtungen er durch die Bedieneinrichtung unmittelbar bedienen kann und bei welchen Fahrzeugeinrichtungen dies nicht möglich ist. Die Fahrzeugeinrichtungen, die direkt bedienbar sind, werden nämlich anhand von Anzeigeelementen repräsentiert, die immer in dem ersten Bereich der Innenfläche der Anzeigefläche dargestellt werden. Anzeigeelemente zu nicht unmittelbar bedienbaren Fahrzeugeinrichtungen werden hingegen in dem zweiten Bereich der Innenfläche der Anzeigefläche dargestellt.

Gemäß einer Ausgestaltung des erfindungsgemäßen Verfahrens wird ein Anzeigeelement durch eine Bedienhandlung von dem nicht bedienbaren Zustand in dem bedienbaren Zustand versetzt. Bei diesem Zustandswechsel wird das Anzeigeelement von dem zweiten Bereich der Innenfläche in den ersten Bereich der Innenfläche verschoben. Wenn der Nutzer somit durch eine Bedienhandlung ein Anzeigeelement in den bedienbaren Zustand versetzt, wird ihm dies intuitiv auf der Anzeigefläche dadurch visualisiert, dass das entsprechende Anzeigeelement in dem ersten Bereich der Innenfläche für die bedienbaren Anzeigeelemente angezeigt wird.

Gemäß einer weiteren Ausgestaltung des erfindungsgemäßen Verfahrens wird die Darstellungsart des Anzeigeelements verändert, wenn es von dem nicht bedienbaren Zustand in den bedienbaren Zustand versetzt wird. Von dem Anzeigeelement werden im bedienbaren Zustand detailliertere Informationen als im nicht bedienbaren Zustand angezeigt.

Bei den Anzeigeelementen kann es sich insbesondere um sogenannte Funktionswidgets handeln. Diese Funktionswidgets können auch im nicht bedienbaren Zustand aktiviert sein und z.B. Informationen zu einer aktiven Datei einer Multimediaeinrichtung, die aktuelle Uhrzeit oder das aktuelle Wetter anzeigen. Wenn ein solches Funktionswidget nun in den bedienbaren Zustand versetzt wird, wird es zum einen in den ersten Bereich der Innenfläche auf der Anzeigefläche verschoben. Ferner kann es vergrößert und mit mehr Informationsgehalt angezeigt werden. Hierdurch kann eine Anzeige geschaffen werden, die es dem Nutzer, d.h. insbesondere dem Fahrer, erleichtert, die Fahrzeugeinrichtung, welcher das bedienbare Anzeigeelement zugeordnet ist, zu bedienen. Es können nämlich insbesondere ergänzende Informationen angezeigt werden, welche die Bedienung erleichtern.

Gemäß einer weiteren Ausgestaltung des erfindungsgemäßen Verfahrens wird bei der Verschiebung des Anzeigeelements von dem zweiten Bereich der Innenfläche in den ersten Bereich der Innenfläche eine Animation einer Drehbewegung des Anzeigeelements angezeigt. Durch diese Animation kann der Nutzer einfacher den Übergang des Anzeigeelements von dem einen Bereich in den anderen Bereich erfassen.

Gemäß einer weiteren Ausgestaltung des erfindungsgemäßen Verfahrens umfasst die Bedieneinrichtung zumindest ein Bedienelement, welches auf dem Lenkrad des Fahrzeugs angeordnet ist. Durch die Betätigung dieses Bedienelements wird ein Anzeigeelement von dem nicht bedienbaren Zustand in den bedienbaren Zustand versetzt. Durch diese Ausgestaltung der Bedieneinrichtung, welche bei dem erfindungsgemäßen Verfahren verwendet wird, wird es dem Fahrer erleichtert, ein Anzeigeelement in den bedienbaren Zustand zu versetzen, da er für diese Bedienhandlung keine Hand vom Lenkrad lösen muss. Hierdurch wird insbesondere die Bedienung während der Fahrt erleichtert und sicherer.

Gemäß einer weiteren Ausgestaltung des erfindungsgemäßen Verfahrens wird auf einer zweiten Anzeigefläche eine Menge von Anzeigeelemente angezeigt, welche auf der ersten Anzeigefläche anzeigbar sind. Durch eine Bedienhandlung ist ein auf der zweiten Anzeigefläche angezeigtes Anzeigeelement in die erste Anzeigefläche verschiebbar. Der Nutzer kann auf diese Weise auf einer möglicherweise größeren Anzeigefläche in der Mittelkonsole alle Anzeigeelemente zur Ansicht bringen und ein bestimmtes Anzeigeelement beispielsweise durch eine Streichgeste von der zweiten Anzeigefläche in die erste Anzeigefläche verschieben.

Die Größe der ersten Anzeigefläche reicht üblicherweise nicht aus, um eine beliebige Anzahl von Anzeigeelementen darzustellen. Daher ist die Anzahl der von der ersten Anzeigefläche dargestellten Anzeigeelemente auf einen Maximalwert begrenzt, d.h. die Anzahl der von der ersten Anzeigefläche dargestellten Anzeigeelemente übersteigt einen Maximalwert nicht. Wenn nun von der ersten Anzeigefläche die maximale Anzahl darstellbarer Anzeigeelemente angezeigt wird und ein neues Anzeigeelement von der zweiten Anzeigefläche in die erste Anzeigefläche verschoben wird, wird ein Anzeigeelement, welches zunächst auf der ersten Anzeigefläche angezeigt wurde, nicht mehr von der ersten Anzeigefläche angezeigt. Es wird insbesondere das Anzeigeelement verschwinden, welches auf der Seite der ersten Anzeigefläche angeordnet ist, welche von der zweiten Anzeigefläche abgewandt ist. Hierdurch erfolgt eine automatische Anordnung der Anzeigeelemente auf der ersten Anzeigefläche. Es ist nicht erforderlich, dass der Nutzer durch eine gesonderte Bedienhandlung ein Anzeigeelement von der ersten Anzeigefläche löscht, wenn er ein neues Anzeigeelement auf der ersten Anzeigefläche platzieren will, die erste Anzeigefläche jedoch bereits die Maximalanzahl möglicher Anzeigeelemente enthält. Auch hierdurch wird die Bedienung der Anzeigefläche durch den Nutzer erleichtert.

Die erfindungsgemäße Vorrichtung zum Anzeigen von Betriebszuständen von Einrichtungen des Fahrzeugs ist dadurch gekennzeichnet, dass mittels der Steuervorrichtung Graphikdaten erzeugbar sind, welche die Anzeigeelemente der weiteren Fahrzeugeinrichtungen bei der Innenfläche der ersten Anzeigefläche anzeigen, wobei den Anzeigeelementen ein bedienbarer Zustand, bei welchem die den Anzeigeelementen zugeordneten Fahrzeugeinrichtungen mittels einer Bedieneinrichtung direkt bedienbar sind, und ein nicht bedienbarer Zustand zugeordnet ist, bei welchem die den Anzeigeelementen zugeordneten Fahrzeugeinrichtungen nicht direkt mittels der Bedieneinrichtung bedienbar sind. Dabei ist die Innenfläche in einen ersten und einen zweiten Bereich unterteilt und die im bedienbaren Zustand befindlichen Anzeigeelemente werden im ersten Bereich und die im nicht bedienbaren Zustand befindlichen Anzeigeelemente werden im zweiten Bereich angezeigt.

Die erfindungsgemäße Vorrichtung ist insbesondere ausgebildet, das vorstehend beschriebene erfindungsgemäße Verfahren auszuführen. Es weist somit dieselben Vorteile wie das erfindungsgemäße Verfahren auf.

Die Bedieneinrichtung der erfindungsgemäßen Vorrichtung umfasst insbesondere Bedienelemente, die auf dem Lenkrad des Fahrzeugs angeordnet sind. Ferner können gesonderte Bedienelemente für die zweite Anzeigefläche vorgesehen sein. Die zweite Anzeigefläche, welche beispielsweise in der Mittelkonsole des Fahrzeugs angeordnet ist, kann beispielsweise für Bedienhandlungen eine berührungsempfindliche Oberfläche aufweisen. Die zweite Anzeigefläche ist somit als sogenannter Touchscreen ausgebildet.

Des Weiteren wird erfindungsgemäß ein Fahrzeug mit einer solchen Vorrichtung bereitgestellt.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Vorrichtung,
- Figur 2: zeigt die Anordnung der Anzeigeflächen des Ausführungsbeispiels der erfindungsgemäßen Vorrichtung in einem Fahrzeug,
- Figur 3: zeigt eine Anzeige, die von einem Ausführungsbeispiel des erfindungsgemäßen Verfahrens erzeugt worden ist und
- Figur 4: zeigt eine weitere Anzeige, die von dem Ausführungsbeispiel des erfindungsgemäßen Verfahrens erzeugt worden ist.

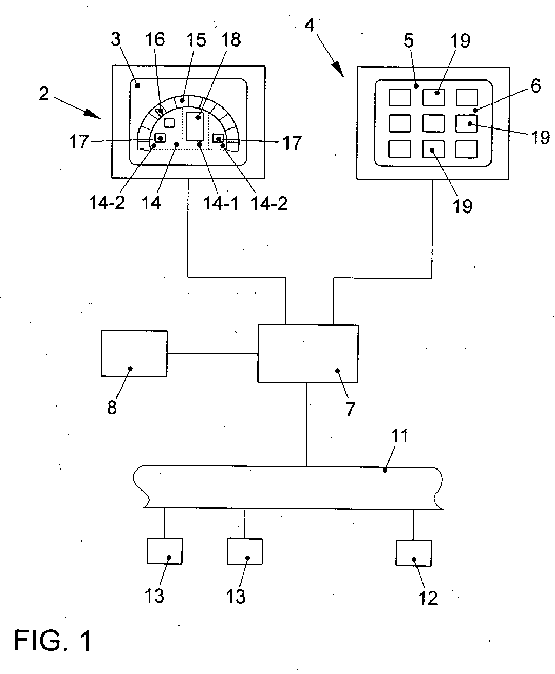

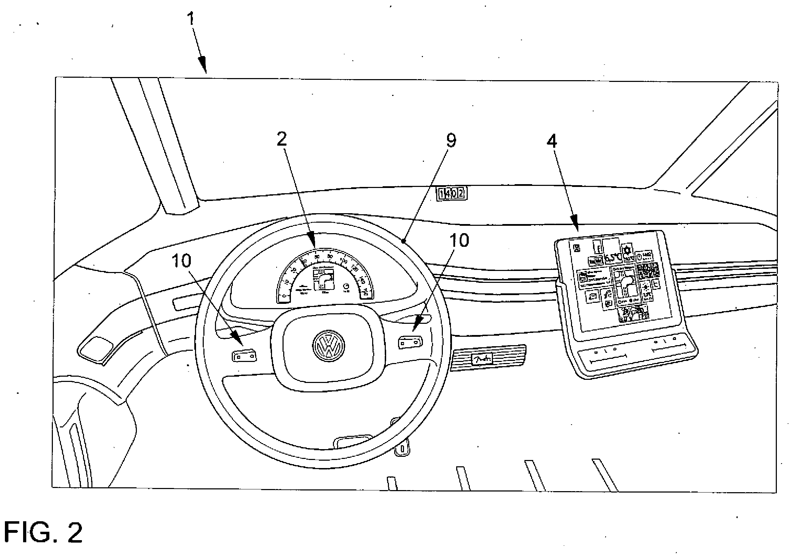

Im Folgenden wird mit Bezug zu den Figuren 1 und 2 der Aufbau des Ausführungsbeispiels der erfindungsgemäßen Vorrichtung erläutert:

In einem Fahrzeug 1 ist eine erste Anzeigeeinrichtung 2 mit einer ersten Anzeigefläche 3 im direkten Sichtfeld des Fahrers des Fahrzeugs 1 angeordnet. Bei der ersten Anzeigeeinrichtung 2 handelt es sich um das sogenannte Kombiinstrument des Fahrzeugs 1. Bei der Mittelkonsole oder im Bereich des Armaturenbrettes des Fahrzeugs 1 ist eine zweite Anzeigeeinrichtung 4 mit einer zweiten Anzeigefläche 5 angeordnet. Die zweite Anzeigefläche 5 weist eine berührungsempfindliche Oberfläche 6 auf. Es wird somit ein sogenannter Touchscreen bereitgestellt.

Die Anzeigeeinrichtungen 2 und 4 sind mit einer Steuervorrichtung 7 gekoppelt. Die Steuervorrichtung 7 erzeugt Grafikdaten für die Anzeige auf den Anzeigeflächen 3 und 5.

Des Weiteren ist die Steuervorrichtung 7 mit einer Bedieneinrichtung 8 gekoppelt. Die Bedieneinrichtung 8 kann Bedienelemente 10 umfassen, die auf dem Lenkrad 9 des Fahrzeugs 1 angeordnet sind. Weitere Bedienelemente können in der Mittelkonsole des Fahrzeugs 1 angeordnet sein. Ferner können Eingaben über die berührungsempfindliche Oberfläche 6 der Anzeigeeinrichtung 4 erfolgen.

Die Steuervorrichtung 7 ist des Weiteren über einen Datenbus 11 des Fahrzeugs mit einem Sensor 12 für die Geschwindigkeit des Fahrzeugs 1 und weiteren Fahrzeugeinrichtungen 13 gekoppelt.

Mittels des Sensors 12 wird die Geschwindigkeit des Fahrzeugs 1 gemessen und ein entsprechender Wert über den Datenbus 11 an die Steuervorrichtung 7 übertragen. Die Steuervorrichtung 7 erzeugt Grafikdaten, welche auf der ersten Anzeigefläche 3 eine bogenförmige Skala 15 anzeigen, auf welcher mittels eines Zeigers 16 der aktuelle Geschwindigkeitswert angezeigt wird. Im hier beschriebenen Ausführungsbeispiel ist die bogenförmige Skala 15 ein halbkreisförmiger Ring.

Innerhalb der bogenförmigen Skala 15 wird eine Innenfläche 14 abgegrenzt. Die Innenfläche 14 ist zum einen durch die innere Begrenzung der bogenförmigen Skala 15 abgegrenzt und zum anderen durch eine Strecke, welche die beiden Enden der bogenförmigen Skala 15 verbindet.

In der Innenfläche 14 werden Anzeigeelemente 17 und 18 angezeigt. Die Anzeigeelemente 17 und 18 sind den weiteren Fahrzeugeinrichtungen 13 zugeordnet. Die weiteren Fahrzeugeinrichtungen 13 können beispielsweise Zielführungseinrichtungen, wie dem Navigationssystem, Fahrerassistenzeinrichtungen, Multimediaeinrichtungen und beliebigen anderen elektronischen Einrichtungen des Fahrzeugs zugeordnet sein. Des Weiteren können die Anzeigeelemente 17 und 18 Anwendungen sein, welche weitere Betriebsparameter des Fahrzeugs bereitstellen oder Informationen, welche das Fahrzeug 1 über Kommunikationsschnittstellen empfängt. Die Anzeigeelemente 17 und 18 können z.B. sogenannten Funktionswidgets zugeordnet sein, welche Meldungen eines E-Mail-Programms, einer Telekommunikationseinrichtung oder eines Wetterdienstes anzeigen.

Die Innenfläche 14 der ersten Anzeigefläche 3 ist nochmals in einen mittigen ersten Bereich 14-1 und einen seitlichen zweiten Bereich 14-2 unterteilt. In dem ersten Bereich 14-1 werden Anzeigeelemente 18 angezeigt, die sich in einem bedienbaren Zustand befinden. In dem zweiten Bereich 14-2 werden hingegen Anzeigeelemente 17 angezeigt, welche sich in einem nicht bedienbaren Zustand befinden. Die verschiedenen Zustände der Anzeigeelemente 17 und 18 werden später mit Bezug zu dem erfindungsgemäßen Verfahren im Detail erläutert.

Des Weiteren werden auf der zweiten Anzeigefläche 5 Anzeigeelemente 19 dargestellt, welche prinzipiell auch auf der ersten Anzeigefläche 3 anzeigbar sind. Auf der zweiten Anzeigfläche 5 ist jedoch mehr Platz für die Darstellung dieser Anzeigeelemente 19. Der Nutzer kann durch eine Streichgeste oder Wischgeste in Richtung der ersten Anzeigefläche 3, die er auf der berührungsempfindlichen Oberfläche 6 der zweiten Anzeigefläche 5 durchführt, ein bestimmtes Anzeigeelement 19 in die erste Anzeigefläche 3 verschieben. Nach einer solchen Streichgeste taucht das entsprechende Anzeigeelement 19 als Anzeigeelement 17 oder 18 auf der Innenfläche 14 der ersten Anzeigefläche 3 auf. Auf der Innenfläche 14 kann jedoch nur eine begrenzte Anzahl von Anzeigeelementen 17 und 18 dargestellt werden. Ist daher die maximale Anzahl darstellbarer Anzeigeelemente 17 und 18 erreicht, wird ein Anzeigeelement 17, 18 in der Innenfläche 14 gelöscht, wenn ein neues Anzeigeelement von der zweiten Anzeigefläche 5 in die erste Anzeigefläche 3 verschoben worden ist. Beispielsweise wird das Anzeigeelement 17 gelöscht, welches am nähesten dem linken Rand der ersten Anzeigefläche 3 dargestellt worden ist.

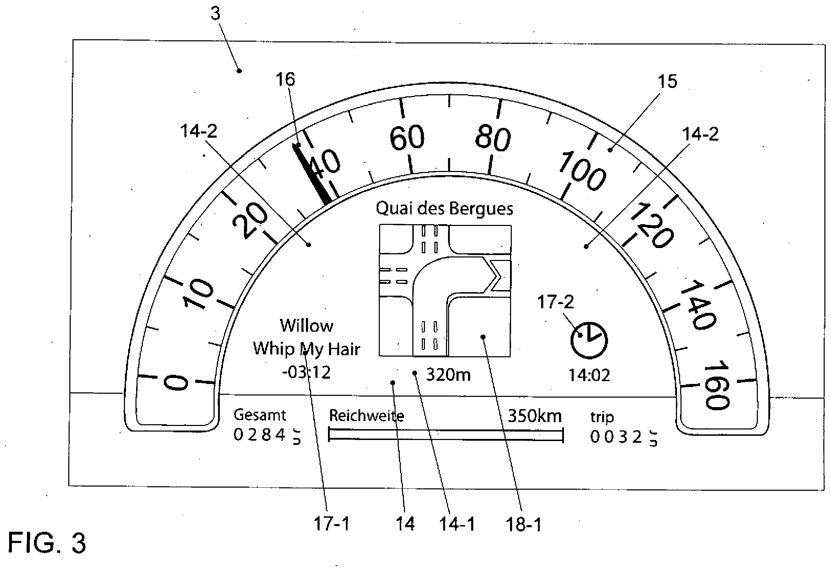

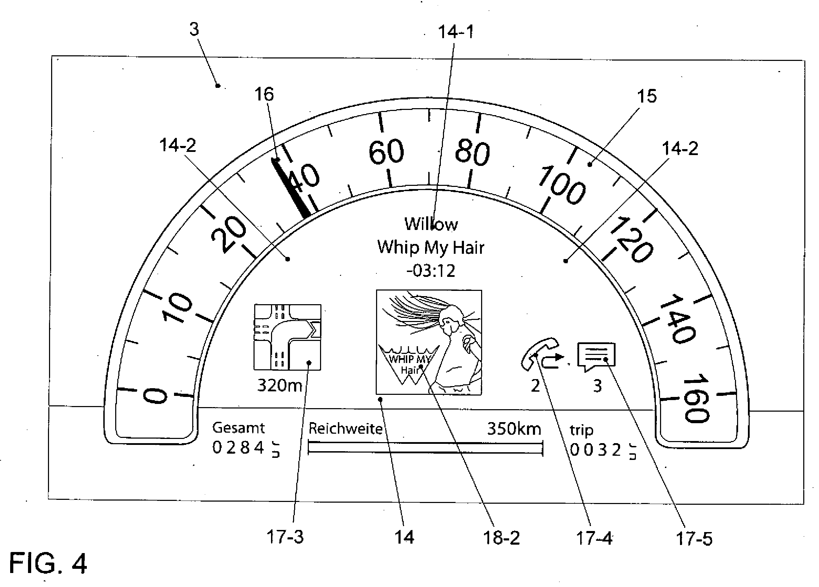

Im Folgenden wird insbesondere mit Bezug zu den Figuren 3 und 4 ein Ausführungsbeispiel des erfindungsgemäßen Verfahrens erläutert, welches von der vorstehend beschriebenen Vorrichtung ausgeführt werden kann:
Figur 3 zeigt eine Anzeige auf der ersten Anzeigefläche 3. Der Zeiger 16 des Geschwindigkeitsmessers zeigt auf der Skala 15 an, dass die Geschwindigkeit des Fahrzeugs etwa 38 km/h ist. Im ersten Bereich 14-1 der Innenfläche 14 wird ein Anzeigeelement 18-1 einer Zielführungseinrichtung des Fahrzeugs 1 dargestellt. Von diesem Anzeigeelement 18-1 wird die Routeninformation visualisiert, dass für die Zielführung das Fahrzeug 1 in 320 m nach rechts abbiegen soll und dass sich das Fahrzeug 1 auf einer bestimmten Straße befindet.

Im zweiten Berech 14-2 wird ein Anzeigeelement 17-1 dargestellt, welches einer Musikwiedergabeeinrichtung zugeordnet ist. Es wird der aktuelle Titel des gerade gespielten Musikstücks angezeigt und weitere Zusatzinformationen hierzu. Auf der rechten Seite wird im zweiten Bereich 14-2 der Innenfläche 14 ein Anzeigeelement 17-2 dargestellt, welches die aktuelle Uhrzeit anzeigt.

Der Nutzer, d.h. insbesondere der Fahrer des Fahrzeugs 1, kann die Fahrzeugeinrichtung, der das Anzeigeelement 18-1 zugeordnet ist, welches im ersten Bereich 14-1 der Innenfläche 14 angezeigt ist, direkt bedienen. Beispielsweise kann der Fahrer die Bedieneinrichtung 8, z.B. ein Bedienelement 10 am Lenkrad 9 des Fahrzeugs 1, betätigen und hierdurch direkt einen Steuerbefehl für die Zielführungseinrichtung des Fahrzeugs 1 erzeugen. Beispielsweise kann er akustische Ausgaben der Zielführungseinrichtung lauter oder leiser stellen oder ein neues Ziel eingeben.

Die Anzeigeelemente 17-1, 17-2, welche im zweiten Bereich 14-2 der Innenfläche 14 angezeigt werden, sind hingegen Fahrzeugeinrichtungen 13 zugeordnet, welche derzeit nicht direkt bedient werden können. Um die Fahrzeugeinrichtungen 13, denen diese Anzeigeelemente 17-1, 17-2 zugeordnet sind, zu bedienen, muss der Nutzer durch eine Bedienhandlung diese Anzeigeelemente 17-1, 17-2 erst in einen bedienbaren Zustand versetzten. Durch die Bedienelemente 10 auf dem Lenkrad 9 des Fahrzeugs 1 kann der Nutzer beispielsweise ein bestimmtes im zweiten Bereich 14-2 angezeigtes Anzeigeelement 17-1 markieren und anschließend in den bedienbaren Zustand versetzen. Nachdem diese Bedienhandlung ausgeführt worden ist, wird in der Innenfläche 14 der ersten Anzeigefläche 3 eine Animation einer Drehbewegung des Anzeigeelements 17-1 ausgeführt, bei welcher sich dieses Anzeigeelement 17-1 in den ersten Bereich 14-1 der Innenfläche 14 bewegt. Das Anzeigeelement 18-1, welches ursprünglich im ersten Bereich 14-1 der Innenfläche 14 angezeigt worden ist, wird hingegen an die Position des zweiten Bereichs 14-2 bewegt, an welcher das Anzeigeelement 17-1 bisher angezeigt worden ist.

Die neue Anzeige auf der ersten Anzeigefläche 3 ist in Figur 4 gezeigt. Im ersten Bereich 14-1 der Innenfläche 14 wird nun ein Anzeigeelement 18-2 der Musikwidergabeeinrichtung gezeigt. Dabei werden detailliertere Informationen als bei dem Anzeigeelement 17-1 dargestellt, es wird nämlich zusätzlich das Cover der CD des gerade gespielten Liedes angezeigt. Das Anzeigeelement 18-2 ist nun im bedienbaren Zustand. D.h. durch eine weitere Bedienhandlung kann der Nutzer nun die Musikwiedergabeeinrichtung steuern. Er kann beispielsweise durch Betätigen der Bedienelemente 10 die Musikwiedergabe anhalten oder ein anderes Lied auswählen. Die Zielführungseinrichtung ist nun hingegen nicht mehr direkt bedienbar. Das zugeordnete Anzeigeelement 17-3 befindet sich entsprechend im zweiten Bereich 14-2 der Innenfläche 14. Dieses Anzeigeelement 17-3 ist jedoch weiterhin aktiv. Es zeigt Routeninformationen der Zielführungseinrichtung des Fahrzeugs 1 an.

Des Weiteren können im zweiten Bereich 14-2 andere Anzeigeelemente 17-4 bzw. 17-5 von Kommunikationseinrichtungen des Fahrzeugs 1 angezeigt werden. Auch diese Kommunikationseinrichtungen sind nicht direkt mittels der Bedieneinrichtung 8 bedienbar. Die entsprechenden Anzeigeelemente 17-4, 17-5 kann der Nutzer jedoch durch eine Bedienhandlung in den bedienbaren Zustand versetzen, sodass dann das entsprechende Anzeigeelement im ersten Bereich 14-1 angezeigt werden würde.

### BEZUGSZEICHENLISTE

- 1: Fahrzeug
- 2: erste Anzeigeeinrichtung
- 3: erste Anzeigefläche
- 4: zweite Anzeigeeinrichtung
- 5: zweite Anzeigefläche
- 6: berührungsempfindliche Oberfläche
- 7: Steuervorrichtung
- 8: Bedieneinrichtung
- 9: Lenkrad
- 10: Bedienelemente
- 11: Datenbus
- 12: Sensor
- 13: weitere Fahrzeugeinrichtungen
- 14: Innenfläche
- 14-1: erster Bereich
- 14-2: zweiter Bereich
- 15: Skala
- 16: Zeiger
- 17, 17-1 bis 17-5: Anzeigeelement
- 18, 18-1, 18-2: Anzeigeelement
- 19: Anzeigeelement

## Patentansprüche

1. Verfahren zum Anzeigen von Betriebszuständen von Einrichtungen eines Fahrzeugs (1), bei dem
- zumindest ein Betriebsparameter des Fahrzeugs (1) oder einer Fahrzeugeinrichtung
(13) erfasst wird,
- der Wert des erfassten Betriebsparameters auf einer im Innenraum des Fahrzeugs
(1) angeordneten ersten Anzeigefläche (3) mittels einer bogenförmigen Skala (15) angezeigt wird, wobei durch die bogenförmige Skala (15) auf der ersten Anzeigefläche (3) eine Innenfläche (14) definiert wird,
- auf der Innenfläche (14) der ersten Anzeigefläche (3) Anzeigeelemente (17, 18) weiterer Fahrzeugeinrichtungen (13) angezeigt werden, **dadurch gekennzeichnet, dass**
- den Anzeigeelementen (17, 18) ein bedienbarer Zustand, bei welchem die den Anzeigeelementen (17, 18) zugeordneten Fahrzeugeinrichtungen (13) mittels einer Bedieneinrichtung (8) direkt bedienbar sind, und ein nicht bedienbarer Zustand zugeordnet ist, bei welchem die den Anzeigeelementen (17, 18) zugeordneten Fahrzeugeinrichtungen (13) nicht direkt mittels der Bedieneinrichtung (8) bedienbar sind, wobei in dem bedienbaren Zustand durch eine Bedienhandlung unmittelbar ein Steuerbefehl für die Fahrzeugeinrichtung (13) erzeugt wird, der dem Anzeigeelement (17, 18) zugeordnet ist, und
- die Innenfläche (14) in einen ersten und einen zweiten Bereich (14-1, 14-2) unterteilt ist und die im bedienbaren Zustand befindlichen Anzeigeelemente (18) im ersten Bereich (14-1) und die im nicht bedienbaren Zustand befindlichen Anzeigeelemente (17) im zweiten Bereich (14-2) angezeigt werden.

2. Verfahren nach Anspruch 1,
**dadurch**
**gekennzeichnet,**
**dass** ein Anzeigeelement (17-1) durch eine Bedienhandlung von dem nicht bedienbaren Zustand in den bedienbaren Zustand versetzt wird und dass bei diesem Zustandswechsel das Anzeigeelement (17-1) von dem zweiten Bereich (14-2) der Innenfläche (14) in den ersten Bereich (14-1) der Innenfläche (14) verschoben wird.

3. Verfahren nach Anspruch 2,
**dadurch**
**gekennzeichnet,**
**dass** die Darstellungsart des Anzeigeelements (17-1) verändert wird, wenn es von dem nicht bedienbaren Zustand in den bedienbaren Zustand versetzt wird, wobei von dem Anzeigeelement (18-2) im bedienbaren Zustand detailliertere Informationen als im nicht bedienbaren Zustand angezeigt werden.

4. Verfahren nach Anspruch 2 oder 3,
**dadurch**
**gekennzeichnet,**
**dass** bei der Verschiebung des Anzeigeelements (17-1) von dem zweiten Bereich (14-2) der Innenfläche (14) in den ersten Bereich (14-1) der Innenfläche (14) eine Animation einer Drehbewegung des Anzeigeelements (17-1) angezeigt wird.

5. Verfahren nach einem der vorhergehenden Ansprüche,
**dadurch**
**gekennzeichnet,**
**dass** die Bedieneinrichtung (8) zumindest ein Bedienelement (10) umfasst, welches auf dem Lenkrad (9) des Fahrzeugs (1) angeordnet ist, und dass durch die Betätigung dieses Bedienelements (10) ein Anzeigeelement (17-1) von dem nicht bedienbaren Zustand in den bedienbaren Zustand versetzt wird.

6. Verfahren nach einem der vorhergehenden Ansprüche,
**dadurch**
**gekennzeichnet,**
**dass** auf einer zweiten Anzeigefläche (5) eine Menge von Anzeigeelementen (19) angezeigt wird, welche auf der ersten Anzeigefläche (3) anzeigbar sind.

7. Verfahren nach Anspruch 6,
**dadurch**
**gekennzeichnet,**
**dass** durch eine Bedienhandlung ein auf der zweiten Anzeigefläche (5) angezeigtes Anzeigeelement (19) in die erste Anzeigefläche (3) verschiebbar ist.

8. Verfahren nach Anspruch 6 oder 7,
**dadurch**
**gekennzeichnet,**
**dass** die Anzahl der von der ersten Anzeigefläche (3) dargestellten Anzeigeelemente (17, 18) einen Maximalwert nicht übersteigt und dass ein Anzeigeelement (17, 18) nicht mehr von der ersten Anzeigefläche (3) angezeigt wird, wenn von der ersten Anzeigefläche (3) die maximale Anzahl darstellbarer Anzeigeelemente (17, 18) angezeigt wird und ein neues Anzeigeelement (19) von der zweiten Anzeigefläche (5) in die erste Anzeigefläche (3) verschoben wird.

9. Vorrichtung zum Anzeigen von Betriebszuständen von Einrichtungen eines Fahrzeugs mit
- einem Sensor (12) zum Erfassen eines Betriebsparameters des Fahrzeugs (1) oder einer Fahrzeugeinrichtung (13),
- einer ersten Anzeigefläche (3), die im Innenraum des Fahrzeugs (1) angeordnet ist,
- einer Bedieneinrichtung (8), mittels welcher weitere Fahrzeugeinrichtungen (13) bedienbar sind, und
- einer Steuervorrichtung (7), die mit dem Sensor (12), der Bedieneinrichtung (8) und der ersten Anzeigefläche (3) gekoppelt ist und mittels derer Grafikdaten erzeugbar sind, die den Wert des erfassten Betriebsparameters auf der ersten Anzeigefläche (3) mittels einer bogenförmigen Skala (15) anzeigt, wobei durch die bogenförmige Skala (15) auf der ersten Anzeigefläche (3) eine Innenfläche (14) definiert wird, und die den weiteren Fahrzeugeinrichtungen (13) zugeordnete Anzeigeelemente (17, 18) auf der Innenfläche (14) der ersten Anzeigefläche (3) anzeigen,
**dadurch gekennzeichnet, dass**
- den Anzeigeelementen (17, 18) ein bedienbarer Zustand, bei welchem die den Anzeigeelementen (17, 18) zugeordneten Fahrzeugeinrichtungen (13) mittels der Bedieneinrichtung (8) direkt bedienbar sind, und ein nicht bedienbarer Zustand zugeordnet ist, bei welchem die den Anzeigeelementen (17, 18) zugeordneten Fahrzeugeinrichtungen (13) nicht direkt mittels der Bedieneinrichtung (8) bedienbar sind, wobei in dem bedienbaren Zustand durch eine Bedienhandlung unmittelbar ein Steuerbefehl für die Fahrzeugeinrichtung (13) erzeugt wird, der dem Anzeigeelement zugeordnet ist, und
- die Innenfläche (14) in einen ersten (14-1) und einen zweiten Bereich (14-2) unterteilt ist und die im bedienbaren Zustand befindlichen Anzeigeelemente (18) im ersten Bereich (14-1) und die im nicht bedienbaren Zustand befindlichen Anzeigeelemente (17) im zweiten Bereich (14-2) angezeigt werden.

10. Vorrichtung nach Anspruch 9, **dadurch gekennzeichnet, dass** mittels der Steuervorrichtung (7) die Grafikdaten auf der Anzeigefläche (3) erzeugbar sind, dass ein Anzeigeelement (17-1) durch eine Bedienhandlung von dem nicht bedienbaren Zustand in den bedienbaren Zustand versetzt wird und dass bei diesem Zustandswechsel das Anzeigeelement (17-1) von dem zweiten Bereich (14-2) der Innenfläche (14) in den ersten Bereich (14-1) der Innenfläche (14) verschoben wird.

11. Vorrichtung nach Anspruch 10, **dadurch gekennzeichnet, dass** mittels der Steuervorrichtung (7) die Grafikdaten auf der Anzeigefläche (3) erzeugbar sind, dass die Darstellungsart des Anzeigeelements (17-1) verändert wird, wenn es von dem nicht bedienbaren Zustand in den bedienbaren Zustand versetzt wird, wobei von dem Anzeigeelement (18-2) im bedienbaren Zustand detailliertere Informationen als im nicht bedienbaren Zustand angezeigt werden.

12. Vorrichtung nach Anspruch 10 oder 11, **dadurch gekennzeichnet, dass** mittels der Steuervorrichtung (7) die Grafikdaten auf der Anzeigefläche (3) erzeugbar sind, dass bei der Verschiebung des Anzeigeelements (17-1) von dem zweiten Bereich (14-2) der Innenfläche (14) in den ersten Bereich (14-1) der Innenfläche (14) eine Animation einer Drehbewegung des Anzeigeelements (17-1) angezeigt wird.

13. Vorrichtung nach einem der Ansprüche 9 bis 12, **dadurch gekennzeichnet, dass** die Bedieneinrichtung (8) zumindest ein Bedienelement (10) umfasst, welches auf dem Lenkrad
(9) des Fahrzeugs (1) angeordnet ist, und dass durch die Betätigung dieses Bedienelements (10) ein Anzeigeelement (17-1) von dem nicht bedienbaren Zustand in den bedienbaren Zustand versetzbar ist.

14. Vorrichtung nach einem der Ansprüche 9 bis 13, **dadurch gekennzeichnet, dass** auf einer zweiten Anzeigefläche (5) eine Menge von Anzeigeelemente (19) angezeigt wird, welche auf der ersten Anzeigefläche (3) anzeigbar sind.

15. Vorrichtung nach Anspruch 14, **dadurch gekennzeichnet, dass** durch eine Bedienhandlung ein auf der zweiten Anzeigefläche (5) angezeigtes Anzeigeelement (19) in die erste Anzeigefläche (3) verschiebbar ist.

16. Vorrichtung nach Anspruch 14 oder 15, **dadurch gekennzeichnet, dass** mittels der Steuervorrichtung (7) die Grafikdaten auf den Anzeigeflächen (3,5) derart erzeugbar sind, dass die Anzahl der von der ersten Anzeigefläche (3) dargestellten Anzeigeelemente (17, 18) einen Maximalwert nicht übersteigt und dass ein Anzeigeelement (17, 18) nicht mehr von der ersten Anzeigefläche (3) angezeigt wird, wenn von der ersten Anzeigefläche (3) die maximale Anzahl darstellbarer Anzeigeelemente (17, 18) angezeigt wird und ein neues Anzeigeelement (19) von der zweiten Anzeigefläche (5) in die erste Anzeigefläche (3) verschoben wird.

17. Fahrzeug (1) mit einer Vorrichtung nach einem der Ansprüche 9 bis 16.

## Claims

1. Method for displaying operating states of apparatuses of a vehicle (1), in which
- at least one operating parameter of the vehicle (1) or of a vehicle apparatus (13) is acquired,
- the value of the acquired operating parameter is displayed on a first display area (3), arranged in the passenger compartment of the vehicle (1), by means of an arcuate scale (15), wherein an inner area (14) on the first display area (3) is defined by the arcuate scale (15),
- display elements (17, 18) of further vehicle apparatuses (13) are displayed on the inner area (14) of the first display area (3), **characterized in that**
- the display elements (17, 18) are assigned a controllable state, in which the vehicle apparatuses (13) which are assigned to the display elements (17, 18) can be controlled directly by means of an operator control apparatus (8), and a non-controllable state, in which the vehicle apparatuses (13) which are assigned to the display elements (17, 18) cannot be controlled directly by means of the operator control apparatus (8), wherein in the controllable state an operator control action directly generates a control command for the vehicle apparatus (13), which control command is assigned to the display element (17, 18), and
- the inner area (14) is divided into a first and a second region (14-1, 14-2), and the display elements (18) which are in the controllable state are displayed in the first region (14-1), and the display elements (17) which are in the non-controllable state are displayed in the second region (14-2).

2. Method according to Claim 1,
**characterized**
**in that** a display element (17-1) is changed from the non-controllable state into the controllable state by an operator control action, and in that during this change of state the display element (17-1) is shifted from the second region (14-2) of the inner area (14) into the first region (14-1) of the inner area (14).

3. Method according to Claim 2,
**characterized**
**in that** the mode of display of the display element (17-1) is changed when the display element is changed from the non-controllable state into the controllable state, wherein the display element (18-2) displays more detailed information in the controllable state than in the non-controllable state.

4. Method according to Claim 2 or 3,
**characterized**
**in that** when the display element (17-1) is shifted from the second region (14-2) of the inner area (14) into the first region (14-1) of the inner area (14) an animation of a rotational movement of the display element (17-1) is displayed.

5. Method according to one of the preceding claims,
**characterized**
**in that** the operator control apparatus (8) comprises at least one operator control element (10) which is arranged on the steering wheel (9) of the vehicle (1), and in that the activation of this operator control element (10) causes a display element (17-1) to be changed from the non-controllable state into the controllable state.

6. Method according to one of the preceding claims,
**characterized**
**in that** a set of display elements (19) which can be displayed on the first display area (3) is displayed on a second display area (5).

7. Method according to Claim 6,
**characterized**
**in that** an operator control action can cause a display element (19) which is displayed on the second display area (5) to be shifted into the first display area (3).

8. Method according to Claim 6 or 7,
**characterized**
**in that** the number of display elements (17, 18) exhibited by the first display area (3) does not exceed a maximum value, and in that a display element (17, 18) is no longer displayed by the first display area (3) if the maximum number of display elements (17, 18) that can be exhibited is being displayed by the first display area (3) and a new display element (19) is shifted from the second display area (5) into the first display area (3).

9. Device for displaying operating states of apparatuses of a vehicle having
- a sensor (12) for acquiring an operating parameter of the vehicle (1) or of a vehicle apparatus (13),
- a first display area (3) which is arranged in the passenger compartment of the vehicle (1),
- an operator control apparatus (8) by means of which further vehicle apparatuses (13) can be controlled, and
- a control device (7) which is coupled to the sensor (12), the operator control apparatus (8) and the first display area (3) and by means of which it is possible to generate graphics data which displays the value of the acquired operating parameter on the first display area (3) by means of an arcuate scale (15), wherein an inner area (14) on the first display area (3) is defined by the arcuate scale (15), and which display the display elements (17, 18), assigned to the further vehicle apparatuses (13), on the inner area (14) of the first display area (3),
**characterized in that**
- the display elements (17, 18) are assigned a controllable state, in which the vehicle apparatuses (13) which are assigned to the display elements (17, 18) can be controlled directly by means of the operator control apparatus (8), and a non-controllable state, in which the vehicle apparatuses (13) which are assigned to the display elements (17, 18) cannot be controlled directly by means of the operator control apparatus (8), wherein in the controllable state an operator control action directly generates a control command for the vehicle apparatus (13), which control command is assigned to the display element, and
- the inner area (14) is divided into a first (14-1) and a second region (14-2), and the display elements (18) which are in the controllable state are displayed in the first region (14-1), and the display elements (17) which are in the non-controllable state are displayed in the second region (14-2).

10. Device according to Claim 9, **characterized in that** the graphics data can be generated on the display area (3) by means of the control device (7), **in that** a display element (17-1) is changed from the non-controllable state into the controllable state by an operator control action, and **in that** during this change of state the display element (17-1) is shifted from the second region (14-2) of the inner area (14) into the first region (14-1) of the inner area (14).

11. Device according to Claim 10, **characterized in that** the graphics data can be generated on the display area (3) by means of the control device (7), **in that** the mode of display of the display element (17-1) is changed when the display element is changed from the non-controllable state into the controllable state, wherein the display element (18-2) displays more detailed information in the controllable state than in the non-controllable state.

12. Device according to Claim 10 or 11, **characterized in that** the graphics data can be generated on the display area (3) by means of the control device (7), **in that** when the display element (17-1) is shifted from the second region (14-2) of the inner area (14) into the first region (14-1) of the inner area (14) an animation of a rotational movement of the display element (17-1) is displayed.

13. Device according to one of Claims 9 to 12, **characterized in that** the operator control apparatus (8) comprises at least one operator control element (10) which is arranged on the steering wheel (9) of the vehicle (1), and **in that** the activation of this operator control element (10) enables a display element (17-1) to be changed from the non-controllable state into the controllable state.

14. Device according to one of Claims 9 to 13, **characterized in that** a set of display elements (19) which can be displayed on the first display area (3) is displayed on a second display area (5).

15. Device according to Claim 14, **characterized in that** an operator control action can cause a display element (19) which is displayed on the second display area (5) to be shifted into the first display area (3).

16. Device according to Claim 14 or 15, **characterized in that** the graphics data can be generated on the display areas (3, 5) by means of the control device (7) in such a way that the number of display elements (17, 18) exhibited by the first display area (3) does not exceed a maximum value, and **in that** a display element (17, 18) is no longer displayed by the first display area (3) if the maximum number of display elements (17, 18) that can be exhibited is being displayed by the first display area (3) and a new display element (19) is shifted from the second display area (5) into the first display area (3).

17. Vehicle (1) having a device according to one of Claims 9 to 16.

## Revendications

1. Procédé pour l'affichage d'états de service de systèmes d'un véhicule (1), dans lequel
- on détecte au moins un paramètre de fonctionnement du véhicule (1) ou d'un système du véhicule (13),
- on affiche la valeur du paramètre de fonctionnement détecté sur une première surface d'affichage (3) disposée dans l'habitacle du véhicule (1) au moyen d'un cadran en forme d'arc (15), dans lequel une face intérieure (14) est définie sur la première surface d'affichage (3) par le cadran en forme d'arc (15),
- on affiche sur la face intérieure (14) de la première surface d'affichage (3) des éléments d'affichage (17, 18) d'autres systèmes du véhicule (13),
**caractérisé en ce que**
- aux éléments d'affichage (17, 18) sont associés un état pouvant être commandé, dans lequel les systèmes du véhicule (13) associés aux éléments d'affichage (17, 18) peuvent être commandés directement au moyen d'un dispositif de commande (8), et un état ne pouvant pas être commandé, dans lequel les systèmes du véhicule (13) associés aux éléments d'affichage (17, 18) ne peuvent pas être commandés directement au moyen du dispositif de commande (8), dans lequel dans l'état pouvant être commandé on produit directement par une manipulation une instruction de commande pour le système du véhicule (13), auquel l'élément d'affichage (17, 18) est associé, et
- la face intérieure (14) est subdivisée en une première et une deuxième plages (14-1, 14-2) et les éléments d'affichage (18) se trouvant dans l'état pouvant être commandé sont affichés dans la première plage (14-1) et les éléments d'affichage (17) se trouvant dans l'état ne pouvant pas être commandé sont affichés dans la deuxième plage (14-2).

2. Procédé selon la revendication 1, **caractérisé en ce que** l'on déplace par une manipulation un élément d'affichage (17-1) de l'état ne pouvant pas être commandé à l'état pouvant être commandé et **en ce que** lors de ce changement d'état l'élément d'affichage (17-1) est déplacé de la deuxième plage (14-2) de la face intérieure (14) à la première plage (14-1) de la face intérieure (14).

3. Procédé selon la revendication 2, **caractérisé en ce que** l'on change le mode de représentation de l'élément d'affichage (17-1) lorsqu'il est déplacé de l'état ne pouvant pas être commandé à l'état pouvant être commandé, dans lequel on affiche des informations plus détaillées de l'élément d'affichage (18-2) dans l'état pouvant être commandé que dans l'état ne pouvant pas être commandé.

4. Procédé selon la revendication 2 ou 3, **caractérisé en ce que** l'on affiche une animation d'un mouvement de rotation de l'élément d'affichage (17-1) lors du déplacement de l'élément d'affichage (17-1) de la deuxième plage (14-2) de la face intérieure (14) à la première plage (14-1) de la face intérieure (14).

5. Procédé selon l'une quelconque des revendications précédentes, **caractérisé en ce que** le dispositif de commande (8) comprend au moins un élément de commande (10), qui est disposé sur le volant de direction (9) du véhicule (1), et **en ce que** l'on déplace un élément d'affichage (17-1) de l'état ne pouvant pas être commandé à l'état pouvant être commandé par actionnement de cet élément de commande (10).

6. Procédé selon l'une quelconque des revendications précédentes, **caractérisé en ce que** l'on affiche sur une deuxième surface d'affichage (5) une quantité d'éléments d'affichage (19), qui peuvent être affichés sur la première surface d'affichage (3).

7. Procédé selon la revendication 6, **caractérisé en ce qu'**un élément d'affichage (19) affiché sur la deuxième surface d'affichage (5) peut être déplacé dans la première surface d'affichage (3) par une manipulation.

8. Procédé selon la revendication 6 ou 7, **caractérisé en ce que** le nombre des éléments d'affichage (17, 18) représentés par la première surface d'affichage (3) ne dépasse pas une valeur maximale et **en ce qu'**un élément d'affichage (17, 18) n'est plus affiché par la première surface d'affichage (3), lorsque le nombre maximal d'éléments d'affichage représentables (17, 18) est affiché par la première surface d'affichage (3) et qu'un nouvel élément d'affichage (19) est déplacé de la deuxième surface d'affichage (5) à la première surface d'affichage (3).

9. Dispositif pour l'affichage d'états de service de systèmes d'un véhicule, avec
- un capteur (12) pour détecter un paramètre de fonctionnement du véhicule (1) ou d'un système du véhicule (13),
- une première surface d'affichage (3), qui est disposée dans l'habitacle du véhicule (1),
- un dispositif de commande (8), au moyen duquel d'autres systèmes du véhicule (13) peuvent être commandés, et
- un système de conduite (7), qui est couplé au capteur (12), au dispositif de commande (8) et à la première surface d'affichage (3) et au moyen duquel on peut produire des données graphiques, qui affiche la valeur du paramètre de fonctionnement détecté sur la première surface d'affichage (3) au moyen d'un cadrant en forme d'arc (15), dans lequel une face intérieure (14) est définie sur la première surface d'affichage (3) par le cadran en forme d'arc (15), et les éléments d'affichage (17, 18) associés aux autres systèmes du véhicule (13) s'affichent sur la face intérieure (14) de la première surface d'affichage (3),
**caractérisé en ce que**
- aux éléments d'affichage (17, 18) sont associés un état pouvant être commandé, dans lequel les systèmes du véhicule (13) associés aux éléments d'affichage (17, 18) peuvent être commandés directement au moyen d'un dispositif de commande (8), et un état ne pouvant pas être commandé, dans lequel les systèmes du véhicule (13) associés aux éléments d'affichage (17, 18) ne peuvent pas être commandés directement au moyen du dispositif de commande (8), dans lequel dans l'état pouvant être commandé on produit directement par une manipulation une instruction de commande pour le système du véhicule (13), auquel l'élément d'affichage est associé, et
- la face intérieure (14) est subdivisée en une première (14-1) et une deuxième (14-2) plages et les éléments d'affichage (18) se trouvant dans l'état pouvant être commandé sont affichés dans la première plage (14-1) et les éléments d'affichage (17) se trouvant dans l'état ne pouvant pas être commandé sont affichés dans la deuxième plage (14-2).

10. Dispositif selon la revendication 9, **caractérisé en ce que** les données graphiques peuvent être produites sur la surface d'affichage (3) au moyen du système de conduite (7), **en ce qu'**un élément d'affichage (17-1) est déplacé de l'état ne pouvant pas être commandé à l'état pouvant être commandé par une manipulation et **en ce que** lors de ce changement d'état l'élément d'affichage (17-1) est déplacé de la deuxième plage (14-2) de la face intérieure (14) à la première plage (14-1) de la face intérieure (14).

11. Dispositif selon la revendication 10, **caractérisé en ce que** les données graphiques peuvent être produites sur la surface d'affichage (3) au moyen du système de conduite (7), **en ce que** le mode de représentation de l'élément d'affichage (17-1) est changé lorsqu'il est déplacé de l'état ne pouvant pas être commandé à l'état pouvant être commandé, dans lequel on affiche des informations plus détaillées de l'élément d'affichage (18-2) dans l'état pouvant être commandé que dans l'état ne pouvant pas être commandé.

12. Dispositif selon la revendication 10 ou 11, **caractérisé en ce que** les données graphiques peuvent être produites sur la surface d'affichage (3) au moyen du système de conduite (7), **en ce qu'**une animation d'un mouvement de rotation de l'élément d'affichage (17-1) est affichée lors du déplacement de l'élément d'affichage (17-1) de la deuxième plage (14-2) de la face intérieure (14) à la première plage (14-1) de la face intérieure (14).

13. Dispositif selon l'une quelconque des revendications 9 à 12, **caractérisé en ce que** le dispositif de commande (8) comprend au moins un élément de commande (10), qui est disposé sur le volant de direction (9) du véhicule (1), et **en ce que** l'élément d'affichage (17-1) peut être déplacé de l'état ne pouvant pas être commandé à l'état pouvant être commandé par l'actionnement de cet élément de commande (10).

14. Dispositif selon l'une quelconque des revendications 9 à 13, **caractérisé en ce qu'**une quantité d'éléments d'affichage (19), qui peuvent être affichés sur la première surface d'affichage (3), sont affichés sur une deuxième surface d'affichage (5).

15. Dispositif selon la revendication 14, **caractérisé en ce qu'**un élément d'affichage (19) affiché sur la deuxième surface d'affichage (5) peut être déplacé dans la première surface d'affichage (3) par une manipulation.

16. Dispositif selon la revendication 14 ou 15, **caractérisé en ce que** les données graphiques peuvent être produites sur les surfaces d'affichage (3, 5) au moyen du système de conduite (7), de telle manière que le nombre des éléments d'affichage (17, 18) représentés par la première surface d'affichage (3) ne dépasse pas une valeur maximale et **en ce qu'**un élément d'affichage (17, 18) n'est plus affiché par la première surface d'affichage (3), lorsque le nombre maximal d'éléments d'affichage représentables (17, 18) est affiché par la première surface d'affichage (3) et qu'un nouvel élément d'affichage (19) est déplacé de la deuxième surface d'affichage (5) à la première surface d'affichage (3).

17. Véhicule (1) avec un dispositif selon l'une quelconque des revendications 9 à 16.
